# EUROPÄISCHE PATENTSCHRIFT

(11) **EP 3 552 369 B1**
(45) Veröffentlichungstag und Bekanntmachung des Hinweises auf die Patenterteilung: **02.12.2020**
(21) Anmeldenummer: 17804890.6
(22) Anmeldetag: 25.11.2017
(51) Int. Cl.: H04L 29/08

(54) **VERFAHREN ZUR KOMMUNIKATION EINES USERS MIT EINEM ERSTEN UND EINEM ZWEITEN ZIELGERÄT**
METHOD FOR THE COMMUNICATION OF A USER WITH A FIRST AND A SECOND TARGET DEVICE
PROCÉDÉ DE COMMUNICATION D'UN UTILISATEUR AVEC UN PREMIER ET UN DEUXIÈME APPAREIL DE VISÉE

(30) Priorität: 06.12.2016 DE 102016014479
(43) Veröffentlichungstag der Anmeldung: 16.10.2019
(73) Patentinhaber: Rückert, Tobias, 73650 Winterbach (DE)
(72) Erfinder: Rückert, Tobias, 73650 Winterbach (DE)
(74) Vertreter: Heidinger, Andreas
(86) Internationale Anmeldenummer: PCT/EP2017/080435
(87) Internationale Veröffentlichungsnummer: WO 2018/104085

(56) Entgegenhaltungen:
- WO-A1-2016/155890
- DE-A1-102014 012 255
- DE-A1-102015 205 664

## Beschreibung

Die Erfindung betrifft ein Verfahren zur Kommunikation eines Users mit einem ersten und einem zweiten Zielgerät mit den Merkmalen des Anspruchs 1.

Viele elektronische Geräte für den industriellen, gewerblichen wie auch den privaten Gebrauch verfügen über eine Schnittstelle, über die Informationen, wie beispielsweise Statusinformationen oder Messwerte ausgelesen werden können oder das Gerät angesteuert, beispielsweise aktiviert, deaktiviert oder konfiguriert werden kann. Beispiele dafür sind im privaten Bereich Wetterstationen, die die Temperatur und die Luftqualität messen, Überwachungskameras, Klimaanlagen, Fernsehgeräte, Heizungssteuerungen, Kühlschränke und im industriellen Bereich Bearbeitungsmaschinen oder Zugangssysteme. Derartige elektronische Geräte werden im Folgenden als Zielgeräte bezeichnet. Die Verbindung zu dem entsprechenden Gerät kann zumeist mittels spezieller Programme auf einem Computer, einem Tablet-Computer, einem Smartphone, einem so genannten Wearable Device oder einem anderen elektronischen Gerät, das Programme oder Apps ausführen kann, aufgebaut werden. Diese elektronischen Geräte werden im Folgenden als Endgeräte bezeichnet.

Um die genannte Verbindung herstellen zu können, ist beispielsweise eine Kopplung über eine drahtlose Verbindung insbesondere das Internet notwendig. Es gibt auch Hersteller von Zielgeräten, die eine Plattform anbieten, über die mit einem oder mehreren Zielgeräten dieses Herstellers eine Verbindung hergestellt werden kann. Eine derartige Plattform kann als eine spezifische Kommunikationsplattform bezeichnet werden. Beispielsweise wird in der US 2013/0191522 A1 eine spezifische Kommunikationsplattform beschrieben, die dort als ein "Smart Object Management Server" bezeichnet wird, und welche die Kommunikation eines Users über ein Endgerät in Form eines "Smart Devices" mit mehreren Zielgeräten in Form von "Smart Objects" ermöglicht.

Um diese Plattform nutzen zu können, ist dann wiederum ein spezielles Programm auf dem Endgerät des Users notwendig. Die genannten Informationen werden dann in einem speziellen Protokoll übertragen, das von dem verwendeten Programm unterstützt wird.

Die dabei verwendeten Protokolle unterscheiden sich sehr stark. Ein User, der mit Zielgeräten verschiedener Hersteller Informationen austauschen möchte, muss daher verschiedene Endgeräte und/oder verschiedene Programme mit verschiedenen Protokollen benutzen.

Die US 2004/0133704 A1 beschreibt ein Verfahren zur Kommunikation eines Users mit mehreren Zielgeräten in Form von so genannten "Legacy Devices". Die Zielgeräte stehen über unterschiedliche spezifische Kommunikationsplattformen in Form von so genannten *Bridges" mit einer universellen Kommunikationsplattform in Form eines so genannten "Control Servers" in Kommunikationsverbindung. Damit kann der User über ein Endgerät in Form einer "Controllers, die universelle Kommunikationsplattform und die spezifischen Kommunikationsplattformen mit den Zielgeräten kommunizieren. Die Kommunikation vom Endgerät zur universellen Kommunikationsplattform erfolgt über ein Netzwerk in einem speziellen Protokoll.

Die WO 2016/155890 A1 beschreibt ein Verfahren zur Bearbeitung elektronischer Nachrichten.

Demgegenüber ist es insbesondere die Aufgabe der Erfindung, ein Verfahren zur Kommunikation eines Users mit einem ersten und einem zweiten Zielgerät vorzuschlagen, welches einen besonders einfachen Informationsaustausch mit mehreren, verschiedenen Endgeräten insbesondere unterschiedlicher Hersteller ermöglicht. Erfindungsgemäß wird die Aufgabe durch ein Verfahren mit den Merkmalen des Anspruchs 1 gelöst.

Beim erfindungsgemäßen Verfahren zur Kommunikation eines Users mit wenigstens einem ersten und einem zweiten Zielgerät, stehen das erste Zielgerät mit einer ersten spezifischen Kommunikationsplattform und das zweite Zielgerät über eine geeignete Ein-/ Ausgabe Schnittstelle mit einer zweiten spezifischen Kommunikationsplattform in Kommunikationsverbindung. Die erste und die zweite spezifische Kommunikationsplattform stehen über das Internet mit einer universellen Kommunikationsplattform in Kommunikationsverbindung und der User steht über ein Endgerät mit der universellen Kommunikationsplattform in Kommunikationsverbindung. Damit kann der User über das Endgerät, die universelle Kommunikationsplattform und die erste spezifische Kommunikationsplattform mit dem ersten Zielgerät und das Endgerät, die universelle Kommunikationsplattform und die zweite spezifische Kommunikationsplattform mit dem zweiten Zielgerät kommunizieren.

Erfindungsgemäß wird für die Kommunikation zwischen Endgerät und universeller Kommunikationsplattform ein Programm, eine so genannte App verwendet, mittels der der User auch mit anderen Usern kommunizieren kann, also beispielsweise ein so genannter Kurznachrichtendienst wie beispielsweise SMS, Twitter ® oder WhatsApp ®. Der User muss damit kein spezielles Programm nur für die Kommunikation mit den Zielgeräten auf seinem Endgerät installieren, sondern kann ein Programm nutzen, das er auch für die Kommunikation mit anderen Usern nutzen kann. Außerdem muss sich der User nicht an die Bedienung eines weiteren Programms gewöhnen.

Um mit Zielgeräten unterschiedlicher Hersteller kommunizieren zu können, muss der User vorteilhafterweise über das Endgerät nur mit der universellen Kommunikationsplattform Informationen austauschen.

Unter einer Kommunikation zwischen einem Endgerät und einem Zielgerät soll hier das Austauschen von digitalen Informationen verstanden werden. Beispielsweise kann der User einen Befehl an das Endgerät senden, beispielsweise eine Zieltemperatur einer Klimaanlage einstellen. Es ist auch möglich, dass der User Einstellungen an einem Zielgerät vornimmt, beispielsweise dass sich eine Klimaanlage von Montag bis Freitag um 8:00 Uhr morgens einschaltet. Das Zielgerät kann auf der anderen Seite beispielsweise Messwerte, beispielsweise die aktuelle Temperatur, Statusinformationen, wie beispielsweise ob es gerade aktiv ist oder auch Quittierungen von Befehlen an das Endgerät senden. Diese ganze Kommunikation wird auch unter dem Begriff "Internet of Things" (deutsch Internet der Dinge) oder abgekürzt loT zusammengefasst.

Die erste spezifische Kommunikationsplattform ist dabei so ausgeführt, dass über sie eine Kommunikation mit einer ersten Gruppe von Zielgeräten, zu der auch das erste Zielgerät gehört, kommunizieren kann. Diese erste Gruppe von Zielgeräten setzt sich beispielsweise aus Zielgeräten eines bestimmten Herstellers oder Zielgeräten eines bestimmten Typs, beispielsweise Klimaanlagen zusammen. Die Kommunikation zwischen der ersten spezifischen Kommunikationsplattform und den Zielgeräten der ersten Gruppe erfolgt insbesondere mit einem ersten spezifischen Zielgeräte-Protokoll. Die erste spezifische Kommunikationsplattform kann mit einem Endgerät eines Users insbesondere über ein erstes spezifisches Endgeräte-Protokoll kommunizieren.

Die zweite spezifische Kommunikationsplattform ist dabei so ausgeführt, dass über sie eine Kommunikation mit einer zweiten Gruppe von Zielgeräten, zu der auch das zweite Zielgerät gehört, kommunizieren kann. Diese zweite Gruppe von Zielgeräten setzt sich beispielsweise aus Zielgeräten eines anderen Herstellers oder Zielgeräten eines anderen Typs, beispielsweise Heizungssteuerungen zusammen. Die Kommunikation zwischen der zweiten spezifischen Kommunikationsplattform und den Zielgeräten der zweiten Gruppe erfolgt insbesondere mit einem zweiten spezifischen Zielgeräte-Protokoll. Die zweite spezifische Kommunikationsplattform kann mit einem Endgerät eines Users insbesondere über ein zweites spezifisches Endgeräte-Protokoll kommunizieren.

Dabei unterscheiden sich sowohl das erste und zweite spezifische Zielgeräte-Protokoll, also auch das erste und zweite Endgeräte-Protokoll. Um mit dem ersten und dem zweiten Zielgerät über ein Endgerät kommunizieren zu können, müsste der User ohne Verwendung des erfindungsgemäßen Verfahrens zwei unterschiedliche Programme nutzen, die üblicherweise auch unterschiedlich bedient und konfiguriert werden müssen. Die Kommunikation mit beiden Zielgeräten über die universelle Kommunikationsplattform ist für den User damit deutlich komfortabler und einfacher als die Kommunikation über zwei verschiedene Programme.

Die universelle Kommunikationsplattform ist dabei so ausgeführt, dass sie mit beiden spezifischen Kommunikationsplattformen kommunizieren kann. Sie weist insbesondere für jede spezifische Kommunikationsplattform ein eigenes Plattform-Schnittstellenmodul auf, das mit der ihm zugeordneten spezifischen Kommunikationsplattform mit dessen spezifischen Endgeräte-Protokoll kommunizieren kann. Um diese Kommunikation zu ermöglichen, stellen üblicherweise Betreiber von spezifischen Kommunikationsplattformen so genannte Programmierschnittstellen (englisch: application programming interfaces, abgekürzt APIs) zur Verfügung. Darüber hinaus weist die universelle Kommunikationsplattform ein oder mehrere Endgeräte-Schnittstellenmodule auf, die mit einem oder mehreren Endgeräten eines oder mehrerer User kommunizieren können.

Wenn der User also beispielsweise einen Befehl an ein bestimmtes Zielgerät senden möchte, dann sendet er diesen Befehl zunächst an die universelle Kommunikationsplattform. Die universelle Kommunikationsplattform prüft dann, über welche spezifische Kommunikationsplattform mit dem bestimmten Zielgerät kommuniziert werden kann. Die universelle Kommunikationsplattform wandelt den Befehl des Users dann im zugehörigen Plattform-Schnittstellenmodul in das zugehörige Endgeräte-Protokoll um und sendet den umgewandelten Befehl an die zugehörige spezifische Kommunikationsplattform, welche ihn dann mit dem zugehörigen Zielgeräte-Protokoll an das Zielgerät weiterleitet. Das Übermitteln einer Information von einem Zielgerät an den User verläuft dabei entsprechend in umgekehrter Reihenfolge.

Die Zielgeräte können beispielsweise als Klimaanlagen, Wetterstationen, Überwachungskameras, Autos, Heizungssteuerungen, Kühlschränke, Steuergeräte für Rollläden, Bearbeitungsmaschinen oder Zugangssysteme ausgeführt sein. Damit können die Zielgeräte beispielsweise Bausteine von so genannten Smart Home, Connected Car oder allgemeiner Internet of Things Anwendungen sein. Grundsätzlich sind alle elektrischen, elektronischen oder photonischen Geräte als Zielgeräte denkbar, die über eine Ein-/Ausgabe Schnittstelle für einen Informationsaustausch verfügen.

Die genannten Kommunikationsplattformen sind insbesondere als Anwendungen oder Programme ausgeführt, die auf einem Server im Internet ausgeführt werden. Sie sind insbesondere auf unterschiedlichen Servern angeordnet, es können aber auch mehrere Kommunikationsplattformen auf einem Server angeordnet sein.

Die Kommunikation zwischen Endgeräten, Kommunikationsplattformen und Zielgeräten erfolgt insbesondere über das Internet. Zielgeräte können entweder direkt oder über ein so genanntes Gateway mit dem Internet verbunden sein. Die Kommunikation mit dem Gateway kann beispielsweise über ein so genanntes Low Power Wide Area Network (deutsch: Niedrigenergieweitverkehrnetzwerk) erfolgen, das dafür ausgelegt ist, eine große Reichweite und ein niedriger Energieverbrauch der Zielgeräte bei niedrigen Betriebskosten zu erreichen. Die spezifischen Kommunikationsplattformen können auch Befehle bzw. Informationen als Infrarot Codes an die Zielgeräte senden. Die unterschiedlichen Codes können in der universellen Kommunikationsplattform oder in der jeweiligen spezifischen Kommunikationsplattform gespeichert sein.

In Ausgestaltung der Erfindung erfolgt die Kommunikation zwischen dem Endgerät und der universellen Kommunikationsplattform über ein Kommunikationsmodul, welches eine Nutzung verschiedener Kommunikationskanäle des Endgeräts ermöglicht. Damit kann der User wählen, über welchen Kommunikationskanal des Endgeräts er mit der universellen Kommunikationsplattform und damit mit einem Zielgerät kommunizieren will. Die Kommunikation ist damit besonders flexibel und an die Wünsche und Bedürfnisse des Users anpassbar.

Unter einem Kommunikationskanal des Endgeräts soll die Nutzung eines auf dem Endgerät installierten Programms oder App zur Kommunikation mit anderen Personen oder Diensten verstanden werden. Dabei handelt es sich allgemein um Apps zum Senden und Empfangen von elektronischen Nachrichten wie beispielsweise E-Mails, SMS, WhatsApp ®, Twitter ® oder Apps für Sprachsteuerungen. Der User kann damit bereits auf dem Endgerät vorhandene Apps für die Kommunikation mit den Zielgeräten nutzen, mit deren Bedienung er insbesondere auch schon vertraut ist. Die Kommunikation wird damit für den User besonders einfach. Der User kann damit auch die für die Kommunikation mit einem Zielgerät notwendigen Informationen, also die Kontaktdaten eines Zielgeräts in einem Adressbuch ablegen, in dem er auch Kontaktdaten von Freunden, Bekannten oder Geschäftspartnern ablegt.

Das Kommunikationsmodul verfügt insbesondere über verschiedene Schnittstellenmodule, die jeweils eine Kommunikation mit einem Endgerät über einen speziellen Kommunikationskanal ermöglichen. Das Kommunikationsmodul setzt empfangene elektronische Nachrichten vom Endgerät so um, dass sie von der universellen Kommunikationsplattform empfangen und verstanden werden können. Außerdem setzt es von der universellen Kommunikationsplattform empfangene Informationen so um, dass sie als elektronische Nachricht über ein Schnittstellenmodul und den zugehörigen Kommunikationskanal an das Endgerät und damit an den User gesandt werden können.

Das Kommunikationsmodul kann beispielsweise wie ein System zur Bearbeitung elektronischer Nachrichten ausgeführt sein, das in der WO 2016/026582 A1 beschrieben ist.

In Ausgestaltung der Erfindung kann der User einen bevorzugten Kommunikationskanal festlegen. Damit kann sich der User die Kommunikation nach seinen Wünschen konfigurieren.

Der User kann beispielsweise festlegen, dass Meldungen von Zielgeräten, so genannte Alerts immer über einen bestimmten Kommunikationskanal, beispielsweise per SMS an das Endgerät gesandt werden. Die Einstellungen können entweder für alle Zielgeräte gelten oder auch für einzelne Gruppen von Zielgeräten oder einzelne Zielgeräte gemacht werden.

Die Auswahl eines bevorzugten Kommunikationsverfahrens kann beispielsweise wie in der DE 102011117777 B3 beschrieben, durchgeführt werden.

In Ausgestaltung der Erfindung steht die universelle Kommunikationsplattform mit einer Wissensdatenbank in Kommunikationsverbindung. Eingaben des Users werden dann mit Hilfe der Wissensdatenbank interpretiert. Die universelle Kommunikationsplattform sendet insbesondere eine Rückfrage an den User, wenn die Eingabe des Users nicht eindeutig interpretiert werden kann. Damit muss sich der User bei der Kommunikation mit der universellen Kommunikationsplattform nicht an ein fest vorgegebenes Protokoll oder eine fest vorgegebene Syntax halten, sondern kann seine Befehle oder Vorgaben mit seinen eigenen Worten oder in freier Sprache formulieren, was die Kommunikation für den User besonders einfach und intuitiv durchführbar macht.

Die universelle Kommunikationsplattform kann insbesondere auch mit mehr als einer Wissensdatenbank in Verbindung stehen und aus deren Rückmeldungen eine Rückmeldung auswählen oder Rückmeldungen unterschiedlicher Wissensdatenbanken kombinieren.

Unter einer Wissensdatenbank soll hier insbesondere eine semantische Datenbank verstanden werden. Derartige Wissensdatenbanken werden von Anbietern im Internet zur Verfügung gestellt, deren Dienste man beispielsweise gegen eine Nutzungsgebühr in Anspruch nehmen kann. Ein Beispiel für so eine Wissensdatenbank ist "Watson" von IBM ®.

Unter einer Interpretation der Eingabe soll hier verstanden werden, dass die Absicht oder die Intention des Users, die er mit seiner Eingabe hat, erkannt wird. So kann beispielsweise aus Eingaben wie "Klimaanlage Besprechungszimmer an" oder "Mach die Klimaanlage für die nächste Besprechung an" abgeleitet werden, dass die Klimaanlage im Besprechungszimmer aktiviert werden soll. Insbesondere führen auch Schreibfehler in der Eingabe nicht dazu, dass die Intention des Users nicht richtig erkannt wird.

Zur Interpretation der Eingabe können auch weitere Informationsquellen, wie beispielsweise ein Kalender des Users ausgewertet werden. Im beschriebenen Beispiel könnte beispielsweise aus dem Kalender die Information gewonnen werden, in welchem Besprechungszimmer ein User die nächste Besprechung hat und daraus geschlossen werden, dass die Klimaanlage in diesem Besprechungszimmer aktiviert werden soll. Es kann beispielsweise auch die Information über den Aufenthaltsort des Users verwendet werden. Der Aufenthaltsort kann beispielsweise auf Basis einer GPS-Ortsbestimmung erfolgen oder aber auch unmittelbar zuvor getätigten Eingaben abgeleitet werden. Hat der User beispielsweise unmittelbar vorher in einem Zimmer die Jalousien geschlossen und gibt anschließend den Befehl, die Klimaanlage zu aktivieren, kann daraus geschlossen werden, dass die Klimaanlage genau in diesem Zimmer aktiviert werden soll.

Wenn die Eingabe des Users aber nicht eindeutig erkannt werden kann, also in dem genannten Beispiel nicht abgeleitet werden kann, welche Klimaanlage aktiviert werden soll, so sendet die universelle Kommunikationsplattform eine Rückfrage an den User, also beispielsweise hier "In welchem Zimmer soll die Klimaanlage aktiviert werden?". Eine Rückfrage kann auch gestellt werden, wenn aus einer Eingabe überhaupt keine Intention abgeleitet werden kann. Dies kann dann aber eventuell aus der Interpretation der Antworten auf die Rückfragen gemacht werden. Wird eine derartige Eingabe dann mehrmals wiederholt, kann auf die Rückfragen verzichtet und so ein neuer "Befehl" gelernt werden. Dies kann für individuell für einen spezifischen User gemacht werden oder auch auf andere User übertragen werden.

In Ausgestaltung der Erfindung nimmt die universelle Kommunikationsplattform einen Auftrag entgegen, speichert und führt ihn zeitverzögert aus. Unter einem Auftrag soll in diesem Zusammenhang insbesondere verstanden werden, dass der die universelle Kommunikationsplattform einen Befehl an ein Zielgerät sendet. Beispielsweise kann der User der universellen Kommunikationsplattform den Auftrag übermitteln, dass in zwei Stunden oder am nächsten Tag um 11:00 Uhr die Klimaanlage in einem bestimmten Besprechungszimmer aktiviert werden soll. Damit kann der User sehr flexibel Befehle an Zielgeräte senden.

In Ausgestaltung der Erfindung kann der User die Übermittlung von Nachrichten von Zielgeräten beeinflussen. Er kann auch einstellen, dass bestimmte Arten von Alerts, beispielsweise in Abhängigkeit ihrer Relevanz, immer oder nur an bestimmten Wochentagen oder zu bestimmten Zeiträumen an das Endgerät gesandt werden. So kann er beispielsweise einstellen, dass nachts und am Wochenende nur Alerts mit der höchsten Relevanz zugestellt werden. Er kann beispielsweise auch einstellen, dass manche Alerts nur im Inland und andere im In- und Ausland zugestellt werden, so dass keinen unnötigen Roaming-Gebühren anfallen können. Die Einstellungen können entweder für alle Zielgeräte gelten oder auch für einzelne Gruppen von Zielgeräten oder einzelne Zielgeräte gemacht werden.

In Ausgestaltung der Erfindung verlangt die universelle Kommunikationsplattform vor der Übermittlung festgelegter Befehle an ein Zielgerät eine Authentifizierung des Users. Damit kann vorteilhafter Weise verhindert werden, dass bestimmte Befehle von nicht autorisierten Usern abgesetzt werden. Beispielsweise sollte es nicht erlaubt sein, dass ein beliebiger User eine Heizung in einem Wohnblock oder eine Klimatisierung einer Produktionshalle deaktiviert. Zur Authentifizierung kann ein User beispielsweise zur Eingabe eines festgelegten Passworts aufgefordert werden oder es wird dem User eine elektronische Nachricht, beispielsweise eine E-Mail mit einem Passwort zugesandt, die der User eingeben soll. Der Befehl wird dann erst nach korrekter Eingabe des Passworts an das entsprechende Zielgerät weiter geleitet. Darüber hinaus sind weitere, dem Fachmann bekannte Arten von Authentifizierungen denkbar.

In Ausgestaltung der Erfindung wird ein vom User an das Zielgerät übermittelter Befehl mit einer Bestätigung bestätigt. Damit kann der User auf vorteilhafter Weise überwachen, ob seine Befehle auch beim jeweiligen Zielgerät angekommen sind und ausgeführt werden. Die Bestätigung kann beispielsweise vom angesprochenen Zielgerät selbst erzeugt werden oder das Zielgerät übermittelt nur eine kurze Bestätigung an die universelle Kommunikationsplattform, die dann eine Bestätigung an den User formuliert und an den User sendet.

In Ausgestaltung der Erfindung enthält die Bestätigung bewusste Schreibfehler. Damit kann der User den Eindruck bekommen, dass er mit einem Mensch und nicht mit einer rechnergesteuerten Kommunikationsplattform kommuniziert. Beispielsweise kann jedes 100. Wort ein Schreibfehler, beispielsweise vertauschte Buchstaben enthalten. Es wird aber insbesondere sichergestellt, dass durch die genannten Schreibfehler ein Sinn der Bestätigung unverändert bleibt. Dies kann insbesondere durch eine Anfrage an die Wissensdatenbank geprüft werden.

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. Dabei zeigen
- Fig. 1: ein Kommunikationssystem mittels welchem ein User mit Zielgeräten kommunizieren kann und
- Fig. 2: ein Kommunikationssystem in einer alternativen Ausführungsform.

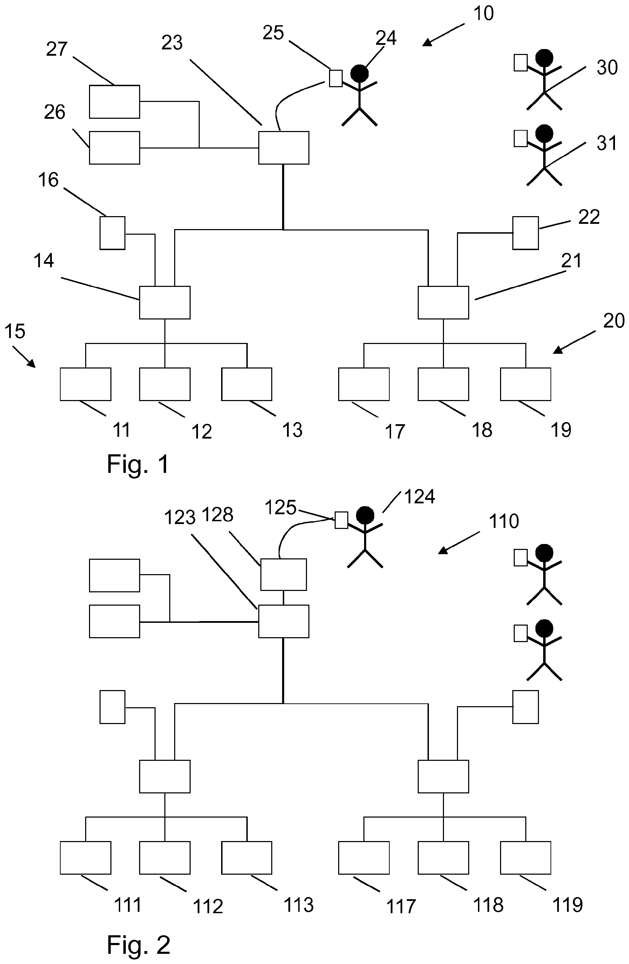

Gemäß Fig. 1 stehen bei einem Kommunikationssystem 10 Zielgeräte 11, 12, 13 über das Internet mit einer ersten spezifischen Kommunikationsplattform 14 in Kommunikationsverbindung. Die Zielgeräte 11, 12, 13 verfügen dazu über geeignete Ein-/ Ausgabe Schnittstellen. Sie bilden damit eine erste Gruppe 15 von Zielgeräten und können so als erste Zielgeräte bezeichnet werden. Ihnen ist gemeinsam, dass sie alle vom selben ersten Hersteller stammen. Die Kommunikation zwischen der ersten spezifischen Kommunikationsplattform 14 und den Zielgeräten 11, 12, 13 erfolgt mittels eines ersten Zielgeräte-Protokolls, das vom ersten Hersteller vorgegeben wird. Der erste Hersteller stellt auch ein Programm, eine so genannte App 16 zur Verfügung, die über das Internet mit der ersten spezifischen Kommunikationsplattform 14 und damit mit den Zielgeräten 11, 12, 13 der ersten Gruppe 15 von Zielgeräten kommunizieren kann. Die Kommunikation zwischen der App 16 und der ersten spezifischen Kommunikationsplattform 14 erfolgt dabei über ein erstes spezifisches Endgeräte-Protokoll.

Zielgeräte 17, 18, 19 bilden eine zweite Gruppe 20 von Zielgeräten und stehen über das Internet mit einer zweiten spezifischen Kommunikationsplattform 21 in Kommunikationsverbindung. Die Zielgeräte 17, 18, 19 verfügen dazu über geeignete Ein-/ Ausgabe Schnittstellen. Sie können als zweite Zielgeräte bezeichnet werden. Die Zielgeräte 17, 18, 19 der zweiten Gruppe 20 von Zielgeräten stammen alle vom selben zweiten Hersteller, der für die Kommunikation zwischen der zweiten spezifischen Kommunikationsplattform 21 und den Zielgeräten 17, 18, 19 ein zweites Zielgeräte-Protokoll vorgibt, welches sich vom ersten Zielgeräte-Protokoll unterscheidet. Der zweite Hersteller stellt ebenfalls eine App 22 zur Verfügung, die über das Internet mit der zweiten spezifischen Kommunikationsplattform 21 und damit mit den Zielgeräten 17, 18, 19 der zweiten Gruppe 20 von Zielgeräten kommunizieren kann. Die Kommunikation zwischen der App 22 und der zweiten spezifischen Kommunikationsplattform 21 erfolgt dabei über ein zweites spezifisches Endgeräte-Protokoll, welches sich vom ersten spezifischen Endgeräte-Protokoll unterscheidet.

Die beiden herstellerspezifischen Apps 16, 22 können beispielsweise auf einem mobilen Endgerät, beispielsweise in Form eines Smartphones eines Users ausgeführt werden. Da die von den beiden Herstellern verwendeten Protokolle unterschiedlich sind, kann mit der App eines Herstellers nicht mit den Zielgeräten des anderen Herstellers kommuniziert werden.

Die beiden individuellen Kommunikationsplattformen 14, 21 können an die ihnen zugeordneten Zielgeräte Befehle senden, wie beispielsweise an eine Klimaanlage den Befehl, sich einzuschalten. Sie können auch Informationen von den ihnen zugeordneten Zielgeräten empfangen, insbesondere Messwerte, wie beispielsweise eine gemessene Temperatur oder Statusmeldungen, wie den aktuellen Betriebszustand eines Zielgeräts.

Die Zielgeräte können beispielsweise als Klimaanlagen, Wetterstationen, Überwachungskameras, Autos, Heizungssteuerungen, Kühlschränke, Steuergeräte für Rollläden, Bearbeitungsmaschinen oder Zugangssysteme ausgeführt sein

Die erste spezifischen Kommunikationsplattform 14 und die zweite spezifischen Kommunikationsplattform 21 sind über das Internet mit einer universellen Kommunikationsplattform 23 verbunden. Um diese Kommunikation zu ermöglichen, stellen die Hersteller der jeweiligen Zielgeräte beziehungsweise die Betreiber der jeweiligen spezifischen Kommunikationsplattform 14, 21 jeweils eine Programmierschnittstelle zur Verfügung, die von der universellen Kommunikationsplattform 23 genutzt wird. Die universelle Kommunikationsplattform 23 kommuniziert damit mit der ersten spezifischen Kommunikationsplattform 14 mit dem ersten Endgeräte-Protokoll und mit der zweiten spezifischen Kommunikationsplattform 21 mit dem zweiten Endgeräte-Protokoll. Damit kann die universelle Kommunikationsplattform 23 über die zugehörige universelle Kommunikationsplattform 14, 21 sowohl mit den Zielgeräten 11, 12, 13 der ersten Gruppe, als auch mit den Zielgeräten 17, 18, 19 der zweiten Gruppe kommunizieren.

Ein User 24 ist über ein mobiles Endgerät 25, beispielsweise ein Smartphone und das Internet mit der universellen Kommunikationsplattform 23 verbunden. Dazu nutzt der User 24 ein Programm auf dem Endgerät 25, mittels welchem er auch mit anderen Usern 30, 31 kommunizieren kann. Es kann insbesondere einen Kurznachrichtendient, beispielsweise WhatsApp ® verwendet werden. Damit kann der User 24 mit einer einzigen App über das Endgerät 25, die universelle Kommunikationsplattform 23 und die erste spezifische Kommunikationsplattform 14 mit den Zielgeräten 11, 12, 13 der ersten Gruppe 15 von Zielgeräten und über das Endgerät 25, die universelle Kommunikationsplattform 23 und die zweite spezifische Kommunikationsplattform 21 mit den Zielgeräten 17, 18, 19 der zweiten Gruppe 20 von Zielgeräten kommunizieren.

Die genannten Kommunikationsplattformen 14, 21, 23 sind als Anwendungen oder Programme ausgeführt, die auf einem Server im Internet ausgeführt werden. Sie sind insbesondere auf unterschiedlichen Servern angeordnet, es können aber auch mehrere Kommunikationsplattformen auf einem Server angeordnet sein.

Damit der User 24 sich bei der Eingabe von Befehlen für die Zielgeräte 11, 12, 13, 17, 18, 19 nicht an fest vorgegebene Begriffe halten muss, sondern die Befehle als freien Text, beispielsweise "Klimaanlage in Raum 225 anmachen" formulieren kann. Ist die universelle Kommunikationsplattform 23 über das Internet mit einer ersten Wissensdatenbank 26 und einer zweiten Wissensdatenbank 27 verbunden. Die universelle Kommunikationsplattform 23 sendet die Eingaben des Users 24 an die Wissensdatenbanken 26, 27, welche dann die Eingabe interpretieren und damit versuchen, eine Intention des Users 24 zu erkennen und an die universelle Kommunikationsplattform 23 zurück zu geben. Diese könnte beispielsweise in dem obigen Beispiel lauten "Klimaanlage Raum 225 aktivieren". Neben der abgeleiteten Intention liefern die Wissensdatenbanken 26, 27 zusätzlich eine so genannte Trefferwahrscheinlichkeit. Diese gibt die Wahrscheinlichkeit an, mit der die genannte Intention der tatsächlichen Intention des Users 24 entspricht. Bei abweichenden Rückmeldungen übernimmt die universelle Kommunikationsplattform 23 die Intention mit der höheren Trefferwahrscheinlichkeit. Sind die Trefferwahrscheinlichkeiten beider Wissensdatenbanken 26, 27 unterhalb eines Grenzwerts von beispielsweise 75 %, so stellt die universelle Kommunikationsplattform 23 eine Rückfrage an den User 24. Diese ist insbesondere so formuliert, dass sie fragt, ob die abgeleitete Intention mit der höheren Trefferwahrscheinlichkeit korrekt ist.

In der universellen Kommunikationsplattform 23 sind Benennungen der einzelnen Zielgeräte 11, 12, 13, 17, 18, 19 gespeichert. Beispielsweise ist gespeichert, dass die Klimaanlage in Raum 225 dem Zielgerät 11 entspricht. Damit kann ein vom User 24 eingegebener und von einer der Wissensdatenbanken 26, 27 erkannter Befehl an das richtige Zielgerät gesandt werden.

Es ist auch möglich, dass die universelle Kommunikationsplattform mit mehr als zwei, nur mit einer oder gar keiner Wissensdatenbank in Kommunikationsverbindung steht. Falls keine Wissensdatenbank verwendet wird, muss sich der User an festgelegte Befehle halten.

Die universelle Kommunikationsplattform 23 ist so ausgeführt, dass sie einen vom User 24 eingegebenen Auftrag entgegennehmen, speichern und zeitverzögert ausführen kann. Beispielsweise kann der User 24 der universellen Kommunikationsplattform 23 den Auftrag übermitteln, dass in zwei Stunden oder am nächsten Tag um 11:00 Uhr ein Zielgerät 11 in Form einer Klimaanlage in einem bestimmten Besprechungszimmer aktiviert werden soll.

Die universelle Kommunikationsplattform 23 ist so ausgeführt, dass der User 24 die Übermittlung von Informationen oder Nachrichten von Zielgeräten 11, 12, 13, 17, 18, 19 beeinflussen kann. Er kann beispielsweise einstellen, dass bestimmte Arten von Informationen, so genannte Alerts, in Abhängigkeit ihrer Relevanz, immer oder nur an bestimmten Wochentagen oder zu bestimmten Zeiträumen an das Endgerät 25 gesandt werden sollen. So kann er beispielsweise einstellen, dass nachts und am Wochenende nur Alerts mit der höchsten Relevanz zugestellt werden. Zusätzlich kann er beispielsweise einstellen, dass manche Alerts nur im Inland und andere im In- und Ausland zugestellt werden. Die Einstellungen können entweder für alle Zielgeräte 11, 12, 13, 17, 18, 19 gelten oder auch für einzelne Gruppen von Zielgeräten oder einzelne Zielgeräte gemacht werden.

Die universelle Kommunikationsplattform 23 ist so ausgeführt, dass sie vor der Übermittlung festgelegter Befehle des Users 24 an bestimmte Zielgeräte, beispielsweise an ein Zielgerät 12 in Form einer Heizungssteuerung eine Authentifizierung des Users 24 verlangt. Beispielsweise ist es nicht erlaubt, dass ein beliebiger User die Heizungssteuerung und damit beispielsweise die Heizung in einem Wohnblock deaktiviert. Zur Authentifizierung wird der User 24 zur Eingabe eines festgelegten Passworts aufgefordert. Der Befehl wird nur bei korrekter Eingabe des Passworts an die das Zielgerät 12 übermittelt. Darüber hinaus sind weitere, dem Fachmann bekannte Arten von Authentifizierungen denkbar.

Die universelle Kommunikationsplattform 23 ist so ausgeführt, dass sie einen vom User 24 an ein Zielgerät 11, 12, 13, 17, 18, 19 übermittelten Befehl mit einer Bestätigung bestätigt. Dabei quittiert das entsprechende Zielgerät den Erhalt des Befehls an die universelle Kommunikationsplattform 23 und diese sendet dann eine entsprechende Bestätigung an den User 24. Es ist auch möglich, dass die Bestätigung vom angesprochenen Zielgerät selbst erzeugt wird und nur über die universelle Kommunikationsplattform 23 an den User 24 übermittelt wird.

Die Bestätigung kann dabei bewusste Schreibfehler enthalten. Beispielsweise kann jedes 100. Wort ein Schreibfehler, beispielsweise vertauschte Buchstaben enthalten. Es wird aber sichergestellt, dass durch die genannten Schreibfehler ein Sinn der Bestätigung unverändert bleibt. Dies wird durch eine Anfrage an die Wissensdatenbanken 26, 17 geprüft.

In Fig. 2 ist ein alternatives Kommunikationssystem 110 dargestellt. Das Kommunikationssystem 110 unterscheidet sich nicht sehr stark vom Kommunikationssystem 10 aus Fig. 1. Aus diesem Grund wird nur auf die Unterschiede der Kommunikationssysteme eingegangen. In der Fig. 2 sind gegenüber der Fig. 1 gleiche oder ähnliche Bestandteile mit einem um 100 erhöhten Bezugszeichen gekennzeichnet.

Gemäß Fig. 2 ist ein mobiles Endgerät 125 eines Users 124 nicht direkt, sondern über ein Kommunikationsmodul 128 mit einer universellen Kommunikationsplattform 123 verbunden. Das Kommunikationsmodul 128 ermöglicht eine Nutzung verschiedener Kommunikationskanäle des Endgeräts 125.

Unter einem Kommunikationskanal des Endgeräts wird dabei die Nutzung eines auf dem Endgerät 125 installierten Programms oder App zur Kommunikation mit anderen Personen oder Diensten verstanden. Dabei handelt es sich allgemein um Apps zum Senden und Empfangen von elektronischen Nachrichten wie beispielsweise E-Mails, SMS, WhatsApp ®, Twitter ® oder Apps für Sprachsteuerungen. Der User 124 kann damit auch die für die Kommunikation mit einem Zielgerät 111, 112, 113, 117, 118, 119 notwendigen Informationen, also die Kontaktdaten eines Zielgeräts in einem Adressbuch ablegen, in dem er auch Kontaktdaten und Freunden, Bekannten oder Geschäftspartnern ablegt.

Der User 124 sendet seine Befehle an die universelle Kommunikationsplattform 123 damit als freien Text.

Das Kommunikationsmodul 128 verfügt über verschiedene, nicht dargestellte Schnittstellenmodule, die jeweils eine Kommunikation mit dem Endgerät 125 über einen speziellen Kommunikationskanal ermöglichen. Das Kommunikationsmodul 128 setzt empfangene elektronische Nachrichten vom Endgerät so um, dass sie von der universellen Kommunikationsplattform 123 empfangen werden können. Außerdem setzt es von der universellen Kommunikationsplattform 123 empfangene Informationen so um, dass sie als elektronische Nachricht über ein Schnittstellenmodul und den zugehörigen Kommunikationskanal an das Endgerät 125 und damit an den User 124 gesandt werden können.

Das Kommunikationsmodul 128 ist so ausgeführt, dass der User 124 einen bevorzugten Kommunikationskanal festlegen kann. Der User 124 kann beispielsweise festlegen, dass Meldungen von Zielgeräten, so genannte Alerts immer über einen bestimmten Kommunikationskanal, beispielsweise per SMS an das Endgerät 125 gesandt werden. Die Einstellungen können entweder für alle Zielgeräte 111, 112, 113, 117, 118, 119 gelten oder auch für einzelne Gruppen von Zielgeräten oder einzelne Zielgeräte gemacht werden.

## Patentansprüche

1. Verfahren zum Informationsaustausch eines Users mit wenigstens einem ersten Zielgerät (11, 12, 13; 111, 112, 113) und einem zweiten Zielgerät (17, 18, 19; 117, 118, 119) wobei
- das erste Zielgerät (11, 12, 13; 111, 112, 113) mit einem ersten spezifischen Zielgeräte-Protokoll mit einer ersten spezifischen Kommunikationsplattform (14) in Kommunikationsverbindung steht,
- das zweite Zielgerät (17, 18, 19; 117, 118, 119) mit einem zweiten spezifischen Zielgeräte-Protokoll mit einer zweiten spezifischen Kommunikationsplattform (21) in Kommunikationsverbindung steht,
- die erste und die zweite spezifische Kommunikationsplattform (14, 21) über das Internet mit einer universellen Kommunikationsplattform (23, 123), welche für jede der spezifischen Kommunikationsplattformen ein eigenes Plattform-Schnittstellenmodul aufweist, in Kommunikationsverbindung stehen und
- der User (24, 124) über ein Endgerät (25, 125) mit der universellen Kommunikationsplattform (23, 123) in Kommunikationsverbindung steht, womit der User (24, 124) über
- das Endgerät (25, 125), die universelle Kommunikationsplattform (23, 123) und die erste spezifische Kommunikationsplattform (14) mit dem ersten Zielgerät (11, 12, 13; 111, 112, 113) und
- das Endgerät (25, 125), die universelle Kommunikationsplattform (23, 123) und die zweite spezifische Kommunikationsplattform (21) mit dem zweiten Zielgerät (17, 18, 19; 117, 118, 119)
kommunizieren kann, indem für die Kommunikation zwischen dem Endgerät (25, 125) und der universellen Kommunikationsplattform (23, 123) ein Programm auf dem Endgerät verwendet wird, mittels dem der User (24, 124) auch mit anderen Usern (30, 31) kommunizieren kann.

2. Verfahren nach Anspruch 1,
**dadurch gekennzeichnet, dass**
die Kommunikation zwischen dem Endgerät (125) und der universellen Kommunikationsplattform (123) über ein Kommunikationsmodul (128) erfolgt, welches eine Nutzung verschiedener Kommunikationskanäle des Endgeräts (125) ermöglicht.

3. Verfahren nach Anspruch 2,
**dadurch gekennzeichnet, dass**
der User (124) einen bevorzugten Kommunikationskanal festlegen kann.

4. Verfahren nach einem der Ansprüche 1 bis 3,
**dadurch gekennzeichnet, dass**
die universelle Kommunikationsplattform (23, 123) mit einer Wissensdatenbank (26, 27) in Kommunikationsverbindung steht und Eingaben des Users (24, 124) mit Hilfe der Wissensdatenbank (26, 27) interpretiert werden.

5. Verfahren nach Anspruch 4,
**dadurch gekennzeichnet, dass**
die universelle Kommunikationsplattform (23, 123) eine Rückfrage an den User (24, 124) sendet, wenn die Eingabe des Users (24, 124) nicht eindeutig interpretiert werden kann.

6. Verfahren nach einem der Ansprüche 1 bis 5,
**dadurch gekennzeichnet, dass**
die universelle Kommunikationsplattform (23, 123) einen Auftrag entgegennimmt, speichert und zeitverzögert ausführt.

7. Verfahren nach einem der Ansprüche 1 bis 6,
**dadurch gekennzeichnet, dass**
der User (24, 124) die Übermittlung von Nachrichten von Zielgeräten (11, 12, 13, 17, 18, 19; 111, 112, 113, 117, 118, 119) beeinflussen kann.

8. Verfahren nach einem der Ansprüche 1 bis 7,
**dadurch gekennzeichnet, dass**
die universelle Kommunikationsplattform (23, 123) vor der Übermittlung festgelegter Befehle an ein Zielgerät (11, 12, 13, 17, 18, 19; 111, 112, 113, 117, 118, 119) eine Authentifizierung des Users (24, 124) verlangt.

9. Verfahren nach einem der Ansprüche 1 bis 8,
**dadurch gekennzeichnet, dass**
ein vom User (24, 124) an das Zielgerät (11, 12, 13, 17, 18, 19; 111, 112, 113, 117, 118, 119) übermittelter Befehl mit einer Bestätigung bestätigt wird.

10. Verfahren nach Anspruch 9,
**dadurch gekennzeichnet, dass**
die Bestätigung bewusste Schreibfehler enthält.

## Claims

1. Method for exchanging information from a user with at least a first target device (11, 12, 13; 111, 112, 113) and a second target device (17, 18, 19; 117, 118, 119), with
- the first target device (11, 12, 13; 111, 112, 113) being in a communication connection with a first specific target device log with a first specific communications platform (14),
- the second target device (17, 18, 19; 117, 118, 119) being in communication connection with a second specific target device log with a second specific communications platform (21),
- the first and the second specific communications platforms (14, 21) being in communication connection via the Internet with a universal communications platform (23, 123) that has its own platform interface module for each of the specific communications platforms and
- the user (24, 124) being in communication connection via a terminal device (25, 125) with the universal communications platform (23, 123),
thus enabling the user (24, 124) to communicate via
- the terminal device (25, 125), the universal communications platform (23, 123) and the first specific communications platform (14) with the first target device (11, 12, 13; 111, 112, 113) and
- the terminal device (25, 125), the universal communications platform (23, 123) and the second specific communications platform (21) with the second target device (17, 18, 19; 117, 118, 119)
by using a program on the terminal device for the communication between the terminal device (25, 125) and the universal communications platform (23, 123), by which the user (24, 124) can also communicate with other users (30, 31).

2. Method according to claim 1,
**characterized in that**
the communication between the terminal device (125) and the universal communications platform (123) is effected via a communication module (128) that allows the use of various communication channels of the said terminal device (125).

3. Method according to claim 2,
**characterized in that**
the user (124) can determine a preferred communication channel.

4. Method according to one of the claims 1 - 3,
**characterized in that**
there is a communication connection between the universal communications platform (23, 123) and a knowledge database (26, 27) and that the input of the user (24, 124) will be interpreted with the help of the said knowledge database (26, 27).

5. Method according to claim 4,
**characterized in that**
the universal communications platform (23, 123) will send a query to the user (24, 124), if the input of the user (24, 124) cannot be interpreted unambiguously.

6. Method according to one of the claims 1 - 5,
**characterized in that**
the universal communications platform (23, 123) accepts and stores an order and executes it time-delayed.

7. Method according to one of the claims 1 - 6,
**characterized in that**
the user (24, 124) can influence the transmission of messages from the target devices (11, 12, 13, 17, 18, 19; 111, 112, 113, 117, 118, 119).

8. Method according to one of the claims 1 - 7,
**characterized in that**
the universal communications platform (23, 123) requests an authentification by the user (24, 124) before predetermined commands are transmitted to a target device (11, 12, 13, 17, 18, 19; 111, 112, 113, 117, 118, 119).

9. Method according to one of the claims 1 - 8,
**characterized in that**
one command transmitted by the user (24, 124) to the target device (11, 12, 13, 17, 18, 19; 111, 112, 113, 117, 118, 119) will be acknowledged by a confirmation.

10. Method according to claim 9,
**characterized in that**
the confirmation contains deliberate spelling mistakes.

## Revendications

1. Procédé pour échanger des informations d'un utilisateur avec au moins un premier dispositif cible (11, 12, 13; 111, 112, 113) et un deuxième dispositif cible (17, 18, 19; 117, 118, 119),
- le premier dispositif cible (11, 12, 13; 111, 112, 113) avec un premier protocole de dispositif cible spécifique communiquant avec une première plate-forme de communication spécifique (14),
- le deuxième dispositif cible (17, 18, 19; 117, 118, 119) avec un deuxième protocole de dispositif cible communiquant avec une deuxième plate-forme de communication spécifique (21),
- les première et deuxième plates-formes de communication spécifiques (14, 21) communiquant par Internet avec une plate-forme de communication universelle (23, 123), qui a un propre module d'interface de plate-forme pour chacune des plates-formes de communication spécifiques et
- l'utilisateur (24, 124) communiquant par le biais d'un terminal (25, 125) avec la plate-forme de communication universelle (23, 123),
ce qui permet à l'utilisateur (24, 124) de pouvoir communiquer par
- le terminal (25, 125), la plate-forme de communication universelle (23, 123) et la première plate-forme de communication spécifique (14) avec le premier dispositif cible (11, 12, 13; 111, 112, 113) et
- le terminal (25, 125), la plate-forme de communication universelle (23, 123) et la deuxième plate-forme de communication spécifique (21) avec le deuxième dispositif cible (17, 18, 19; 117, 118, 119),
en utilisant pour la communication entre le terminal (25, 125) et la plateforme de communication universelle (23, 123) un programme sur le terminal, au moyen duquel l'utilisateur (24, 124) peut également communiquer avec d'autres utilisateurs (30, 31).

2. Procédé selon la revendication 1,
**caractérisé en ce que**
la communication entre le terminal (125) et la plate-forme de communication universelle (123) s'effectue par le biais d'un module de communication (128), qui permet l'utilisation de différents canaux de communication du terminal (125).

3. Procédé selon la revendication 2,
**caractérisé en ce que**
l'utilisateur (124) peut déterminer un canal de communication préféré.

4. Procédé selon l'une des revendications 1 à 3,
**caractérisé en ce que**
la plate-forme de communication universelle (23, 123) communique avec une base de connaissances (26, 27) et les entrées saisies par l'utilisateur (24, 124) sont interprétées à l'aide de la base de connaissances (26, 27).

5. Procédé selon la revendication 4,
**caractérisé en ce que**
la plate-forme de communication universelle (23, 123) envoie une demande de renseignement complémentaire à l'utilisateur (24, 124), si l'entrée saisie par l'utilisateur (24, 124) ne peut pas être clairement interprétée.

6. Procédé selon l'une des revendications 1 à 5,
**caractérisé en ce que**
la plate-forme de communication universelle (23, 123) accepte une commande, la mémorise et l'exécute avec un retard.

7. Procédé selon l'une des revendications 1 à 6,
**caractérisé en ce que**
l'utilisateur (24, 124) peut influencer la transmission de messages des dispositifs cibles (11, 12, 13, 17, 18, 19; 111, 112, 113, 117, 118, 119).

8. Procédé selon l'une des revendications 1 à 7,
**caractérisé en ce que**
la plate-forme de communication universelle (23, 123) demande une authentification de l'utilisateur (24, 124) avant la transmission de commandes déterminées à un dispositif cible (11, 12, 13, 17, 18, 19; 111, 112, 113, 117, 118, 119).

9. Procédé selon l'une des revendications 1 à 8,
**caractérisé en ce qu'**une
commande transmise par l'utilisateur (24, 124) au dispositif cible (11, 12, 13, 17, 18, 19; 111, 112, 113, 117, 118, 119) est validée par une confirmation.

10. Procédé selon la revendication 9,
**caractérisé en ce que**
la confirmation contient des erreurs typographiques délibérées.
